(19) Europäisches Patentamt
European Patent Office
Office européen des brevets

(11) Numéro de publication : **0 500 544 B1**

(12) # FASCICULE DE BREVET EUROPEEN

(45) Date de publication du fascicule du brevet : **02.03.94 Bulletin 94/09**

(51) Int. Cl.$^5$ : **B01J 2/00,** C04B 20/10

(21) Numéro de dépôt : **90913710.1**

(22) Date de dépôt : **12.09.90**

(86) Numéro de dépôt international : **PCT/FR90/00653**

(87) Numéro de publication internationale : **WO 91/04093 04.04.91 Gazette 91/08**

(54) **PROCEDE DE TRAITEMENT DE MATERIAUX, MINERAUX OU ORGANIQUES, PULVERULENTS PAR DES COMPOSES THERMODURCISSABLES.**

(30) Priorité : **13.09.89 FR 8912213**

(43) Date de publication de la demande : **02.09.92 Bulletin 92/36**

(45) Mention de la délivrance du brevet : **02.03.94 Bulletin 94/09**

(84) Etats contractants désignés : **AT BE CH DE DK ES FR GB IT LI LU NL SE**

(56) Documents cités :
**DE-A- 2 404 880**
**DE-A- 3 544 451**
**FR-A- 2 223 329**
**US-A- 4 694 905**

(73) Titulaire : **SOPAP**
**Aubignat, S.-Ferréol-des-Côtes**
**F-63600 Ambert (FR)**

(72) Inventeur : **PAULIN, François**
**Aubignat, St.-Ferréol-des-Côtes**
**F-63600 Ambert (FR)**

(74) Mandataire : **Gaucherand, Michel**
**Ixas Conseil 15 Rue Emile Zola**
**F-69002 Lyon (FR)**



Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un procédé de traitement de matériaux pulvérulents de dimension même de l'ordre du micromètre, au moyen de composés thermodurcissables.

L'invention concerne également les matériaux pulvérulents résultant du procédé pour lequel ils sont rendus réactifs à l'égard du milieu auquel ils sont destinés ou porteurs de pigment(s) coloré(s).

Depuis longtemps, des matériaux minéraux pulvérulents sont mis en oeuvre pour réaliser des revêtements décoratifs de façade, tels que granulate de marbre, ou encore en tant que charges minérales de dimension pigmentaire dans les peintures, les enduits, les matières plastiques ou encore le papier.

Dans la majorité des cas, ces charges sont de couleur naturelle et, dès lors qu'elles sont mises en oeuvre dans des milieux à colorer, elles doivent être associées à des colorants d'origine minérale ou organique.

Mais cette manière d'introduire les charges pulvérulentes dans les milieux à colorer fait apparaître des inconvénients qui peuvent se révèler majeurs, voire insurmontables. Car se manifestent :

- la nécessité d'effectuer le broyage des pigments colorés avant de les introduire dans le milieu d'accueil conjointement avec les charges pulvérulentes,
- la difficulté de réaliser à l'échelle industrielle la reproductibilité d'un produit coloré,
- l'hétérogénéité accidentelle de la dispersion des pigments colorés dans le milieu à traiter,
- la monochromie du milieu d'accueil après l'introduction des pigments,
- ou encore une prise d'huile importante liée aux caractéristiques physiques des grains constituant la charge,
- enfin, le caractère inerte des charges à l'égard du milieu d'accueil.

Pour tenter de limiter au moins les inconvénients précités, il a été proposé de nombreux types de procédés permettant de colorer des agrégats minéraux tels que des sables avec des pigments métalliques ou organiques.

L'un des procédés, illustré par exemple par le brevet FR 2,272,962, consiste à traiter à chaud lesdits agrégats au moyen d'un composé thermodurcissable tel que les résines époxydes polyuréthanes, acryliques ou phénoliques, en présence des pigments colorés.

Toutefois, un tel type de procédé présente l'inconvénient majeur de ne pouvoir traiter que des matériaux minéraux pulvérulents grossiers ayant une granulométrie allant de 0,1 à 5 millimètres, tels que par exemple les sables de carrière siliceux, les sables de dune, les graviers, les sables et gravillons concassés, les matériaux artificiels tels que le corindon, le carborundum, les matériaux vitrifiés, les laitiers de hauts-fourneaux, les billes et concassés de verre, les agrégats métalliques et similaires.

Ce procédé présente également le désavantage de ne pouvoir traiter que des matériaux pulvérulents de densité relativement élevée, par exemple supérieure à 2, et de devoir travailler à des températures préférentiellement hautes pour ce type de traitement, et d'au plus 130°C (consommation d'énergie importante).

D'autres procédés ont été proposés comme celui décrit dans la demande de brevet français n° 2,223,329 qui concerne la coloration de matières minérales granulaires en milieux aqueux ou celui divulgué dans le brevet allemand n° 3,544,451 relatif à l'enrobage de matières granuleuses solubles par une résine synthétique perméable à l'eau. Ces procédés présentent le double inconvénient majeur de ne pas permettre de conserver la granulométrie de départ et de conduire à la formation irréversible d'agglomérats de grandes dimensions.

Or, s'il est d'une grande facilité de traiter des matériaux pulvérulents, en particulier d'origine minérale, dont la granulométrie est grossière (par exemple telle que celle évoquée dans le brevet FR 2,272,962) dès lors que la granulométrie des matériaux à traiter s'affine et est de l'ordre de quelques microns, un procédé tel que celui décrit ne peut être pratiqué car il conduit à la formation d'agglomérats générant des matériaux pulvérulents dont la granulométrie d'origine n'est pas respectée. De ce fait, la courbe granulométrique des matériaux fins traités selon ce type de procédé est transformée en se déplaçant vers des dimensions grossières.

## Sommaire de l'invention

L'invention vise à créer un procédé de traitement de matériaux pulvérulents qui élimine les inconvénients précités.

L'invention vise également l'obtention de matériaux pulvérulents rendus réactifs à l'égard du milieu auquel ils sont destinés, ou porteurs (c'est-à-dire supports) de pigments colorés, alors même qu'ils peuvent avoir une granulométrie extrêmement faible, même de l'ordre du micromètre.

Enfin, l'invention vise le traitement de matériaux, même de faible densité, se présentant sous des formes aussi diverses que pulvérulentes ou sous l'aspect de fibres, de paillettes.

Le procédé selon l'invention pour le traitement de matériaux pulvérulents au moyen de composés thermodurcissables se caractérise en ce que, sous agitation, on imprègne les matériaux pulvérulents de dimension

moyenne comprise entre environ 0,1 micron et environ 25 millimètres à traiter au moyen d'une solution organique de l'un au moins des constituants du composé thermodurcissable souhaité, puis on élimine des matériaux imprégnés le solvant de la solution d'imprégnation, et en ce qu'on met en présence les matériaux pulvérulents imprégnés du premier constituant avec le ou les autres constituants du composé thermodurcissable souhaité pour provoquer la formation dudit composé et obtenir lesdits matériaux traités.

## Description détaillée de l'invention

Selon le procédé de l'invention, le constituant du composé thermodurcissable mis en oeuvre dans l'imprégnation des matériaux à traiter est choisi dans le groupe constitué par les polyisocyanates, les polyols et les résines époxy.

Quand le constituant du composé thermodurcissable utilisé pour l'imprégnation des matériaux à traiter est un polyisocyanate, il est choisi parmi les polyisocyanates bien connus du type aromatique ou aliphatique tels que par exemple, le toluènediisocyanate (T.D.I.), le diphénylméthane diisocyanate 4-4' et ses homologues (M.D.I) le naphtalène diisocyanate 1-5(N.D.I.), ou de type linéaire tels que par exemple l'hexaméthylène diisocyanate (H.D.I.), l'isophore diisocyanate (I.P.D.I.) et son isomère linéaire, le 1,4 transcyclohéxène diisocyanate (C.D.I), ou se présentant sous l'aspect de prépolymères obtenus par la combinaison des isocyanates entre eux ou avec des composés réactifs trivalents, conduisant à l'obtention par exemple de triisocyanates.

Dans ce premier cas, l'autre constituant du composé thermodurcissable de revêtement est choisi dans le groupe constitué par l'eau, les polyols, les résines époxy, les amines, les amides.

Quand le constituant du composé thermodurcissable utilisé pour l'imprégnation des matériaux à traiter est un polyol, il est choisi parmi ceux bien connus qui appartiennent aux familles des polyéthers et des polyesters qui sont des produits de polycondensation ou de polyaddition.

Parmi les polyéthers polyols courants peuvent être cités par exemple, les produits d'addition d'oxyde de méthylène ou d'oxyde de propylène sur un polyol simple tel que par exemple, le glycol, le glycérol, le triméthylolpropane, le sorbitol, en présence ou non d'oxyde d'éthylène. Mais peuvent être également cités des polyéthers polyols spéciaux tels que par exemple des polyéthers à base aminée, obtenus par addition d'oxyde de propylène ou éventuellement d'oxyde d'éthylène sur des amines, des polyéthers halogénés, des polyéthers greffés résultant de la copolymérisation de styrène et d'acrylonitrile en suspension dans un polyéther, ou encore le polytétraméthylèneglycol.

Parmi les polyesters polyols peuvent être mentionnés par exemple ceux résultant de la polycondensation de polyalcools sur des polyacides ou leurs anhydrides tels que les diacides, tels que par exemple adipique, phtalique ou autres, réagissant avec des diols (par exemple éthylène glycol, propylène glycol, butylène glycol ou autres); des triols (par exemple glycérol, triméthylolpropane ou autres), et des tétrols (par exemple le pentaérythritol ou autres, seuls ou en mélange).

Mais parmi les polyols peuvent être également évoqués des composés divers hydroxylés tels que par exemple les polybutadiènes hydroxylés, les prépolymères à terminaisons hydroxyles (résultant de la réaction d'un excès de polyol sur un diisocyanate), ou encore les polyols simples tels que par exemple glycérol, aminoalcools mis en oeuvre en petite quantité avec les polyéthers polyols ou les polyesters polyols pour augmenter la réticulation.

Dans le cas où le constituant d'imprégnation est choisi parmi les polyols, l'autre constituant du composé thermodurcissable de revêtement est choisi dans le groupe constitué par les polyisocyanates précédemment évoqués.

Quand le constituant du composé thermodurcissable utilisé pour l'imprégnation des matériaux à traiter est un polymère époxy, il est choisi parmi ceux contenant au moins une fonction époxy par molécule répondant à la formule :

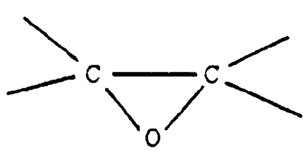

On peut, par exemple, utiliser le produit de la réaction d'une épihalohydrine, comme par exemple l'épichlorhydrine et d'un polyol, tel que le glycérol, un polyphénol, ou encore un bis-hydroxyphényl alcane.

Ces polymères époxy sont choisis parmi les polymères connus, de poids moléculaires moyens compris entre 350 et 3800, offrant un équivalent époxy de 140 à 4000 et un équivaient d'estérification de 80 à 240.

Préférentiellement, lesdits polymères époxy sont choisis parmi ceux dont le poids moléculaire moyen est

compris entre 470 et 2900, ayant un équivalent époxy de 225 à 2050 et un équivalent d'estérification de 100 à 190.

Entrent également dans la définition les polymères époxy dont les groupements hydroxyles latéraux sont estérifiés par des acides carboxyliques, tels que, par exemple, les acides gras comme l'acide laurique, les acides monocarboxyliques des huiles de ricin, de coprah et autres.

De tels polymères époxy sont connus sous des appellations commerciales telles que, par exemple, les Araldites (CIBA-GEIGY), Epophens (BORDEN CHEMICAL), Epikotes (SHELL CHEMICALS LTD), Rutapox (BAKELITE LTD), Grilonits (EMSER WERKE), D.E.R. (DOW CHEMICAL), Mod-epox (MONSANTO), Eurepox (SCHERING) ou équivalents.

Dans le cas où le constituant d'imprégnation est choisi parmi les polymères époxy, l'autre constituant du composé thermodurcissable de revêtement est choisi dans le groupe constitué par au moins une substance organique durcisseuse munie au moins de l'une des fonctions $-NH_2$ ou $-CONH_2$, -NHR ou -CONHR et/ou -COOH, qui réagit à travers ces fonctions avec le polymère époxy afin de durcir la composition.

Par exemple, les groupements $-NH_2$ ou -NHR du durcisseur réagissent par addition avec les groupements époxy terminaux selon les réactions :

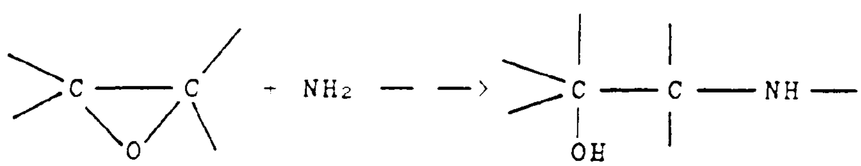

ou

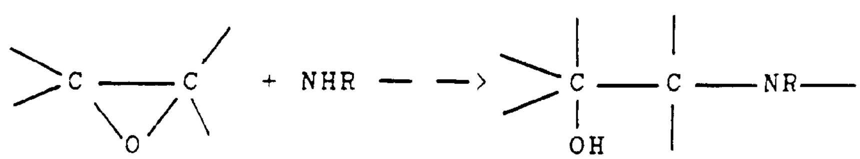

Les groupements -COOH du durcisseur peuvent également intervenir selon une réaction d'estérification avec les groupements hydroxyles latéraux du polymère époxy, selon la réaction :

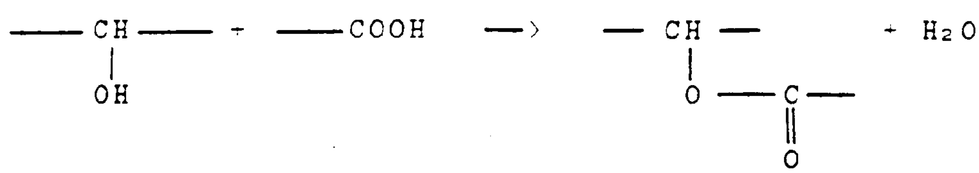

Le durcisseur est, de préférence, choisi parmi les polyamides résultant de la réaction d'un diacide sur une diamine comme cela est bien connu de l'homme de l'art. de tels polyamides sont connus sous les appellations telles que , par exemple Versamid , Euredur (SCHERING) , Synolide (CRAY-VALLEY) ou équivalents.

Le polymère époxy et le durcisseur amidé et/ou aminé sont introduits dans les compositions anticorrosives de révêtements selon les rapports pondéraux égals ou légéremnt différents de la stoechiométrie.

Un catalyseur de réaction entre le polymère époxy et le durcisseur peut être également introduit pour améliorer la réaction entre ces deux composants. On peut utiliser par exemple , des composés organométalliques ou encore des amines et/ou polyamines , à raison de 0,1 à 5% en poids par rapport au polymère époxy.

Le constituant d'imprégnation, particulièrement lorsqu'il est un polyisicyanate, peut être souhaitablement associé à un polymère et/ou copolymère vinylique à condition que ledit polymère et /ou copolymère soit soluble dans le solvant dudit constituant, en mettant à profit leurs intéressantes propriétés de résistance à l'eau , aux intempéries , leur dureté, leur souplesse et leur adhérence aux substrats , en particulier quand polymère et/ou copolymère vinylique sont modifiés par l'acide maléique.

Parmi les homopolymères et/ou copolymères concernés, on peut citer, à titre d'exemple, le chlorure de

polyvinyle, le chlorure de polyvinylesurchloré, l'acétate de polyvynile, les copolymères vinyliques , hydroxyles et/ou transformés par l'acide maléique. Ces polymères et/ou copolymères sont choisis parmi ceux connus, disposant d'un poids moléculaire moyen compris entre 5000 et 25000,

De tels polymères et/ou copolymères vinyliques sont connus sous les appellations commerciales telles que , par exemple UCAR (VAGD, VYES) commercialisé par UNION GARBIDE, Laroflex MP35 de BASF , VINNOL,de WACKER CHEMIE ,ou équivalents.

Le constituant d'imprégnation et le polymère et/ou copolymère vinylique sont préférentiellement mis en oeuvre selon les rapports pondéraux égals ou légéremnt différents de la stoechiométrie.

Le solvant organique mis en oeuvre dans le cadre de l'invention est choisi parmi ceux qui, bien connus de l'homme de l'art, sont compatibles avec les constituants des composés thermodurcissables souhaités, Le solvant est généralement choisi d'une manière séléctive selon le ou les constituants dudit composé thermodurcissable souhaité parmi ceux ne comportant pas de radicaux réactifs à l'égard desdits constituants tels que, les cétones, les alkyles , les aryles , les alkyles-aryles, halogénés ou non, mis en oeuvre seuls ou en mélange.

Aussi, sont préférentiellement mis en oeuvre selon l'invention, les cétones tels que la méthyléthylcétone, la méthylpropylcétone, la méthylisobutylcétone, la méthylamylcétone, la cyclohexanone, les aryles tels que le toluène, le xylène, les alkyles halogénés tels que le perchloréthylène, le trichloréthylène, le dichlorométhane.

La solution organique d'imprégnation des matériaux pulvérulents peut contenir préférentiellement de 1 à 40 % en poids du constituant d'imprégnation par rapport à la masse totale.

Mais la solution organique d'imprégnation peut également contenir en tout ou partie le ou les colorants à mettre en oeuvre ainsi que divers adjuvants de type connu utilisés dans la production des composés thermodurcissables.

Ces divers adjuvants sont par exemple les stabilisants thermiques ou photochimiques, les lubrifiants, des plastifiants, les antistatiques, les ignifugeants, les catalyseurs de réaction, les tensioactifs, ou autres encore.

En pratique, le procédé selon l'invention comporte les étapes suivantes :

a. on prépare la solution d'imprégnation des matériaux pulvérulents à traiter par dissolution de l'un des constituants du composé thermodurcissable souhaité dans le solvant organique retenu pour sa compatibilité avec ledit constituant,

b. on traite les matériaux pulvérulents au moyen de la solution préparée dans l'étape (a) par simple humectage ou par immersion,

c. on élimine, au moins pour l'essentiel, le solvant organique dès la fin de l'étape d'imprégnation (b), puis,

d. on traite les matériaux pulvérulents imprégnés provenant de l'étape (c) au moyen du ou des autres constituants du composé thermodurcissable souhaité pour provoquer la formation dudit composé.

Le traitement des matériaux pulvérulents imprégnés du premier constituant provenant de l'étape (c) peut souhaitablement s'effectuer par la mise en présence du ou des autres contituants du composé thermodurcissable souhaité avec lesdits matériaux imprégnés :

- soit par un contact direct avec lesdits matériaux parce que le ou les autres constituants se présentent sous une forme gazeuse ou liquide, facilement manipulable, ne nécessitant pas l'intervention d'un agent porteur, comme un solvant par exemple,
- soit par un humectage desdits matériaux au moyen d'une solution du ou des autres constituants parce que se présentant sous une forme liquide trop visqueuse, pâteuse ou même solide, dans un solvant organique compatible, c'est-à-dire ne comportant pas de radicaux réactifs à l'égard desdits constituants du composé thermodurcissable souhaité. Dans ce deuxième cas, le solvant d'humectage de l'étape (d) est souhaitablement éliminé en continu, au fur et à mesure de l'introduction de la solution, pour permettre la réalisation homogène et continue de la réaction de formation du composé thermodurcissable souhaité.

Dans l'un et l'autre cas, lesdits constituants sont mis en oeuvre par des moyens connus et appropriés tels que par exemple, injection, vaporisation, pulvérisation ou autres, afin de créer le contact le plus intime entre les constituants du composé thermodurcissable souhaité et favoriser la formation bien homogène dudit composé.

L'élimination du ou des solvants intervenant dans l'imprégnation des matériaux pulvérulents, puis dans l'humectage des matériaux imprégnés, se fait par l'usage de procédés et moyens connus de l'homme de l'art. Elle peut s'effectuer par exemple par élévation de la température du milieu, ou encore par la création d'un vide partiel ou tous autres.

La formation du composé thermodurcissable souhaité par réaction des constituants dudit composé peut s'effectuer alors même que les matériaux pulvérulents en cours de traitement sont aussi bien au repos que maintenus sous agitation.

Tout au long de la mise en oeuvre du procédé selon l'invention, le traitement s'effectue généralement à la température ambiante, hormis pour les étapes d'élimination des solvants mis en oeuvre, ces étapes pouvant

se faire par augmentation de la température du milieu.

Les matériaux pulvérulents selon le procédé de l'invention peuvent avoir aussi bien une origine minérale qu'organique et peuvent disposer de formes aussi diverses que fibres, paillettes, pseudosphères ou cubes ou autres.

Lorsque ces matériaux sont d'origine minérale, ils peuvent être choisis parmi des produits aussi divers que, par exemple, le carbonate de calcium, le carbonate de magnésium, le carbonate de zinc, la dolomie, la chaux, la magnésie; l'hydroxyde d'aluminium; la silice; les argiles et autres silico-alumineux tels que le kaolin, le talc, le mica; les oxydes métalliques tels que par exemple l'oxyde de zinc, les oxydes de fer, l'oxyde de titane, la wollastonite, les fibres et billes de verre.

Lorsque ces matériaux sont d'origine organique, ils peuvent être choisis parmi des produits aussi divers que par exemple, de l'amidon, des fibres et farine de cellulose, les fibres de carbone, le noir de carbone ou autres.

Tous les matériaux pulvérulents évoqués peuvent être traités seuls ou en mélange.

Grâce au procédé selon l'invention, il a été possible de produire des matériaux pulvérulents, dont la dimension moyenne s'étage d'environ 0,1 micron à environ 25 millimètres :

- de couleur naturelle mais rendues réactifs à l'égard de leur environnement, de prise d'huile abaissée et d'indice de réfraction augmenté par comparaison avec les caractéristiques originelles desdites charges pulvérulentes,
- ou colorés dans une gamme de nuances très diverses (coloris pastels ou vifs, de couleur rouge, verte, bleue, jaune, ocre et même noire), et de nuances très homogènes de grains à grains.

Dès lors, et par comparaison avec les matériaux pulvérulents traités selon les procédés de l'art antérieur, les matériaux pulvérulents résultant du procédé selon l'invention présentent les avantages d'être facilement dispersables, de ne plus devoir être accompagnés de pigments colorés, d'avoir une faible prise d'huile, de rendre le milieu d'accueil très homogène, de permettre la réalisation de produits polychromes par le mélange de charges colorées de nuances différentes, enfin, d'être réactifs à l'égard du milieu d'accueil, tel que les matières polymères, les peintures, les suspensions de couchage de papier.

L'invention sera mieux comprise grâce à la description illustrative des exemples de traitement de matériaux selon le procédé de l'invention.

<u>Exemples 1 à 4</u>

Ces exemples illustrent le traitement de coloration selon l'invention de matériaux pulvérulents, de diamètre moyen variable selon chaque matériau mis en oeuvre.

Pour ce faire, et pour chaque matériau pulvérulent, selon une première étape, on a préparé la solution d'imprégnation desdits matériaux par dissolution de l'un des constituants du composé thermodurcissable souhaité dans le solvant organique retenu en raison de sa compatibilité avec ledit composé, à raison d'environ 1% à 40% en poids dudit composé par rapport au solvant. On a également introduit dans cette solution d'imprégnation au moins un catalyseur de réaction ainsi que colorants, stabilisant photochimique, ou autres.

Dans une deuxième étape, on a introduit les matériaux pulvérulents à traiter dans un malaxeur ainsi que la solution d'imprégnation en une quantité telle que l'on produise :

- soit une imprégnation des matériaux minéraux pulvérulents,
- soit une immersion desdits matériaux.

Dans le cas où l'on pratique une simple imprégnation des matériaux pulvérulents, le malaxage était maintenu jusqu'à l'obtention de matériaux pulvérulents bien imprégnés.

Selon une troisième étape qui est enclenchée dès la fin de l'imprégnation ou de l'immersion, on a éliminé le solvant organique de la solution d'imprégnation par un moyen bien connu tel que par exemple chauffage, mise sous pression réduite ou autres.

Dès lors que les matériaux pulvérulents traités sont suffisamment débarrassés du solvant d'imprégnation, on a traité selon une dernière étape les matériaux pulvérulents imprégnés et séchés au moyen de l'autre constituant du composé thermodurcissable pour provoquer la formation dudit composé thermodurcissable souhaité, ce traitement s'effectuant, soit par une simple mise en contact des matériaux pulvérulents imprégnés et séchés avec ledit constituant quand celui-là se présente sous une forme gazeuse ou liquide peu visqueuse, soit par humectage desdits matériaux pulvérulents au moyen d'une solution organique dudit constituant (introduite par exemple par fine pulvérisation dans le malaxeur), tout en éliminant au fur et à mesure ledit solvant par évaporation.

On a laissé la réaction s'effectuer pendant le temps nécessaire, qui peut être de quelques minutes à quelques heures selon les constituants utilisés pour former le composé thermodurcissable souhaité, tout en maintenant le milieu réactionnel sous une lente agitation.

Toutes les formulations (c'est-à-dire solvants, composés, catalyseurs, colorants) ainsi que les conditions de réalisation des exemples 1 à 4 ont été réunies dans les tableaux 1 et 2 ci-après.

TABLEAU 1

| EXEMPLE | 1 | 2 |
|---|---|---|
| Matériaux pulvérulents<br>Type<br>Diamètre moyen en $\mu$ m<br>Quantité mise en oeuvre en kg | <br>$CaCO_3$<br>1<br>25 | <br>$CaCO_3$<br>30<br>25 |
| Solution d'imprégnation<br><br>SOLVANT<br>Type<br>Quantité mise en oeuvre en kg<br><br>CONSTITUANT D'IMPREGNATION<br>Type<br><br>Quantité mise en oeuvre en kg<br><br>CATALYSEUR<br>Type<br>Quantité mise en oeuvre en kg<br><br>COLORANTS<br>Type<br>Quantité mise en oeuvre en kg | immersion<br><br><br>trichloréthylène<br>9<br><br><br>polyisocyanate :<br>DESMODUR N 3300<br>0,625<br><br><br>dilauratedibutyle étain<br>0,0035<br><br><br>bleu de phtalocyanine<br>0,080 | humectage<br><br><br>dichlorométhane<br>0,6<br><br><br>polyol:<br>monoéthylèneglycol<br>0,040<br><br><br>---<br><br><br><br>bleu de phtalocyanine<br>0,080 |
| Constituant de réaction<br>Type<br><br>Quantité mise en oeuvre en kg | <br>eau d'absorption du $CaC0_3$ | <br>polyisocyanate :<br>DESMODUR N 3300<br>0,220 |
| Temps de malaxage en minutes<br>Temps et température d'évaporation du solvant et de réaction des constituants en minutes | 18<br>30 minutes à 40°C<br>ou<br>240 minutes à 20°C | |

DESMODUR N 3300 commercialisé par la Société BAYER.

TABLEAU 2

| EXEMPLE | 3 | 4 |
|---|---|---|
| Matériaux pulvérulents<br>Type<br>Diamètre moyen en μ m<br>Quantité mise en oeuvre en kg | <br>$CaCO_3$<br>60<br>25 | <br>Silice<br>300<br>25 |
| Solution d'imprégnation | humectage | humectage |
| SOLVANT<br>Type<br>Quantité mise en oeuvre en kg | <br>dichlorométhane<br>0,6 | <br>trichloréthylène<br>1,05 |
| CONSTITUANT D'IMPREGNATION<br>Type<br><br>Quantité mise en oeuvre en kg | <br>polyisocyanate :<br>DESMODUR N 3300<br>0,220 | <br>époxy :<br>RUTAPOX 0190/X75<br>0,250 |
| CATALYSEUR<br>Type<br>Quantité mise en oeuvre en kg | <br>dilaurate dibutyle étain<br>0,002 | <br>---<br> |
| COLORANTS<br>Type<br><br>Quantité mise en oeuvre en kg | <br>rouge monoazoïque<br>(sel de strontium)<br>0,040 | <br>rouge azoïque de<br>condensation<br>0,030 |
| Constituant de réaction<br>Type<br><br>Quantité mise en oeuvre en kg | <br>eau<br><br> | <br>amine :<br>RUTAPOX VE 2869 N<br>0,08 |
| Temps de malaxage en minutes<br>Temps et température d'évaporation du solvant et de réaction des constituants en minutes | 15<br>30 minutes à 60°C<br>ou<br>120 minutes à 20°C | 10<br>15 minutes à 25°C<br>ou<br>30 minutes à 15°C |

RUTAPOX VE 2869N commercialisé par la Société BAKELITE
RUTAPOX 0190/X75 commercialisé par la Société BAKELITE
DESMODUR N 3300 commercialisé par la Société BAYER.

Les matériaux pulvérulents ainsi traités étaient colorés d'une manière très homogène, quel que soit l'exemple réalisé, sans qu'il y ait apparition d'une agglomération, la granulométrie d'origine étant pratiquement conservée au terme du traitement.

## Revendications

1. Procédé de traitement de matériaux pulvérulents au moyen de composés thermodurcissables, caractérisé en ce qu'on imprègne les matériaux pulvérulents de dimension moyenne comprise entre environ 0,1 micron et environ 25 millimètres au moyen d'une solution organique de l'un au moins des constituants du composé thermodurcissable souhaité, en ce qu'on élimine des matériaux imprégnés le solvant de la solution d'imprégnation et en ce qu'on met en présence des matériaux pulvérulents imprégnés du premier constituant avec le ou les autres constituants du composé thermodurcissable souhaité pour provoquer la formation dudit composé et obtenir lesdits matériaux traités.

2. Procédé selon la revendication 1, caractérisé en ce que le constituant de la solution organique d'imprégnation est choisi parmi les polyisocyanates, les polyols ou les polymères époxy.

3. Procédé selon les revendications 1 ou 2, caractérisé en ce que, quand le constituant de la solution organique d'imprégnation est un polyisocyanate, celui-ci est du type aromatique, aliphatique, linéaire, ou est un prépolymère obtenu par la combinaison des isocyanates entre eux ou avec des composés réactifs.

4. Procédé selon la revendication 3, caractérisé en ce que le polyisocyanate est préférentiellement choisi parmi le groupe constitué par le toluènediisocyanate (T.D.I), le diphénylméthane diisocyanate 4-4' et ses homologues (M.D.I), le naphtalène diisocyanate 1-5 (N.D.I), l'hexaméthylène diisocyanate (H.D.I), l'isophorone diisocyanate (I.P.D.I) et son isomère linéaire, le 1,4 transcyclohéxène diisocyanate (C.D.I).

5. Procédé selon les revendications 1 ou 2, caractérisé en ce que, quand le constituant de la solution organique d'imprégnation est un polyol, celui-ci est choisi dans le groupe constitué par les polyéthers et les polyesters.

6. Procédé selon la revendication 5, caractérisé en ce que, quand le polyol est un polyéther, il est choisi dans le groupe constitué par les produits d'addition d'oxyde de méthylène ou d'oxyde de propylène sur un polyol simple, des produits d'addition des oxydes d'éthylène ou de propylène sur les amines, les polyéthers halogénés, les polyéthers greffés résultant de la copolymérisation de styrène et d'acrylonitrile en suspension dans un polyéther.

7. Procédé selon la revendication 5, caractérisé en ce qu quand le polyol est un polyester, il est choisi dans groupe constitué par ceux résultant de la polycondensa de polyalcools sur des polyacides ou leurs anhydride préférentiellement les diacides, adipique ou phtalique, réagissant avec des polyalcools, préférentiellement avec l'éthylène glycol, le propylène glycol, le butylène glycol, le glycérol, le triméthylolpropane, le pentaérythritol, seuls ou en mélange.

8. Procédé selon la revendication 5, caractérisé en ce que le polyol est choisi dans le groupe des composés hydroxyles, des prépolymères à terminaisons hydroxyles, ou des polyols simples mis en oeuvre avec des polyéthers ou polyesters pour augmenter la réticulation.

9. Procédé selon les revendications 1 ou 2, caractérisé en ce que, quand le constituant de la solution organique d'imprégnation est un polymère époxy ayant au moins une fonction époxy par molécule, ledit polymère a un poids moléculaire moyen compris entre 350 et 3800, offrant un équivalent époxy de 140 à 4000 et un équivalent d'estérification de 80 à 240.

10. Procédé selon la revendication 9, caractérisé en ce que le polymère époxy dispose préférentiellement d'un poids moléculaire moyen compris entre 470 et 2900 offrant un équivalent époxy de 225 à 2050 et un équivalent d'estérification de 100 à 190.

11. Procédé selon l'une quelconque des revendications 1 à 10, caractérisé en ce que l'on associe au constituant de la solution organique d'imprégnation un polymère et/ou copolymère vinylique modifié ou non par l'acide maléique.

12. Procédé selon la revendication 11, caractérisé en ce que le polymère et/ou le copolymère vinylique est choisi parmi ceux ayant un poids moléculaire moyen compris entre environ 5000 et 25000.

13. Procédé selon l'une quelconque des revendications 1 à 12, caractérisé en ce que le solvant organique de la solution d'imprégnation est choisi dans le groupe constitué par les cétones, les alkyles, les aryles, les alkylaryles halogénés ou non.

14. Procédé selon la revendication 13, caractérisé en ce que le solvant est préférentiellement choisi dans le groupe constitué par la méthyléthylcétone, la méthylpropylcétone, la méthylisobutylcétone, la méthylamylcétone, la cyclohéxanone, le toluène, le xylène, le perchloréthylène, le trichloréthylène et dichlorométhane.

15. Procédé selon l'une quelconque des revendications 1 à 14, caractérisé en ce que la solution organique d'imprégnation contient préférentiellement de 1% à 40% en poids du constituant d'imprégnation par rapport à la masse totale.

16. Procédé selon l'une quelconque des revendications 1 à 15, caractérisé en ce que la solution d'imprégnation des matériaux pulvérulents contient éventuellement en tout ou partie, des colorants, des catalyseurs de réaction, des stabilisants thermiques ou photochimiques, des lubrifiants, des plastifiants, des antistatiques, des ignifugeants, des tensioactifs.

17. Procédé selon l'une quelconque des revendications 1 à 16, caractérisé en ce que le deuxième constituant du composé thermodurcissable souhaité est choisi dans le groupe constitué par :
    - l'eau, les polyols, les polymères époxy, les amines, les amides quand le premier constituant est un polyisocyanate,
    - les polyisocyanates quand le premier constituant est un polyol,
    - les substances organiques (durcisseur) munies d'au moins l'une des fonctions $-NH_2$, $-CO-NH_2$, -NHR, -CO-NHR, -COOH, quand le premier constituant est un polymère époxy.

18. Procédé selon l'une quelconque des revendications 1 à 17, caractérisé en ce que les matériaux pulvérulents imprégnés du premier constituant sont mis en présence du deuxième constituant, par contact direct quand ledit constituant est gazeux ou liquide, par humectage au moyen d'une solution dudit constituant dans un solvant organique compatible quand ledit constituant est insuffisamment liquide, avec élimination dudit solvant en continu.

**Patentansprüche**

1. Verfahren zur Behandlung von pulverförmigen Stoffen mit in Wärme aushärtenden Substanzen, dadurch gekennzeichnet, daß man die pulverförmigen Substanzen einer durchschnittlichen Größe zwischen ungefähr 0,1 mm und ungefähr 25 mm mit einer organischen Lösung mindestens eines der Bestandteile der gewünschten, in Wärme aushärtenden Substanz imprägniert, daß man aus den imprägnierten Stoffen das Lösungsmittel der Imprägnierungslösung entfernt und daß man die mit dem ersten Bestandteil imprägnierten, pulverförmigen Stoffe mit dem oder den anderen Bestandteilen der gewünschten, in Wärme aushärtenden Substanz zusammen bringt, um die Bildung der besagten Substanz hervorzurufen und die besagten, behandelten Stoffe zu erhalten.

2. Verfahren nach Anspruch 1, dadurch gekennzeichnet, daß als Bestandteil der organischen Imprägnierungslösung ein Polyisocyanat, ein Polyol oder ein Epoxypolymer verwendet wird.

3. Verfahren nach den Ansprüchen 1 oder 2, dadurch gekennzeichnet, daß wenn der Bestandteil der organischen Imprägnierungslösung ein Polyisocyanat ist, ein aromatisches, aliphatisches oder lineares Isocyanat oder ein Prepolymer, erhalten aus einer Mischung der Isocyanate untereinander oder mit reaktiven Stoffen, verwendet wird.

4. Verfahren nach Anspruch 3, dadurch gekennzeichnet, daß als Polyisocyanat vorzugsweise Toluylendiisocyanat (T.D.I.), 4,4'-Diphenylmethandiisocyanat sowie seine Homologe (M.D.I), Naphtalendiisocyanat (N.D.I.), Hexamethylendiisocyanat (H.D.I.), Isophorondiisocyanat (I.P.D.I.) und sein lineares Isomer oder 1,4-Transcyclohexendiisocyanat (C.D.I) verwendet wird.

5. Verfahren nach den Ansprüchen 1 oder 2, dadurch gekennzeichnet, daß wenn der Bestandteil der organischen Imprägnierungslösung ein Polyol ist, ein Polyether oder ein Polyester verwendet wird.

6. Verfahren nach Anspruch 5, dadurch gekennzeichnet, daß wenn das Polyol ein Polyether ist, ein Polyether aus der folgenden Gruppe verwendet wird: Additionsprodukte von Methylen- oder Propylenoxid mit einem einfachen Polyol, Additionsprodukte von Ethylen- oder Propylenoxid mit Aminen, Halogenpolyether, Graftpolyether aus der Copolymerisation von Styrol und Acrylnitril in Suspension in Polyether.

7. Verfahren nach Anspruch 5, dadurch gekennzeichnet, daß wenn das Polyol ein Polyester ist, ein Polyester gebildet aus der Polykondensation von Polyalkoholen, vorzugsweise Ethylenglykol, Propylenglykol, Butylenglykol, Glycerin, Trimethylol-propan oder Pentaerythrit, einzeln oder in Mischung, mit Polysäuren oder ihren Anhydriden, vorzugsweise Disäuren, Adipin- oder Phtalsäure, verwendet werden.

8. Verfahren nach Anspruch 5, dadurch gekennzeichnet, daß als Polyol Hydroxylverbindungen, Prepolymere mit Hydroxylendgruppen oder einfache Polyole, welche zusammen mit Polyethern oder Polyestern als Vernetzungsmittel verwendet werden.

9. Verfahren nach den Ansprüchen 1 oder 2, dadurch gekennzeichnet, daß wenn der Bestandteil der organischen Imprägnierungslösung ein Epoxypolymer mit wenigstens einer Epoxidfunktion pro Molekül ist, besagtes Polymer ein mittleres Molekulargewicht von 350 bis 3800 hat, sowie ein Epoxid-Äquivalent von etwa 140 bis etwa 4000 und ein Veresterungs-Äquivalent von etwa 80 bis 240 aufweist.

10. Verfahren nach Anspruch 9, dadurch gekennzeichnet, daß das Epoxypolymer wenigstens ein mittleres Molekulargewicht zwischen 470 und 2900 hat, sowie ein Epoxid-Äquivalent von etwa 225 bis 2050 und ein Veresterungs-Äquivalent von etwa 100 bis 190 aufweist.

11. Verfahren nach einem beliebigen der Ansprüche 1 bis 10, dadurch gekennzeichnet, daß man dem Bestandteil der organischen Imprägnierungslösung ein Polymer und/oder ein Vinylcopolymer, welches mit Maleinsäure modifiziert sein kann, zuordnet.

12. Verfahren nach Anspruch 11, dadurch gekennzeichnet, daß das Polymer und/oder das Vinylcopolymer ein mittleres Molekulargewicht von 5000 bis 25000 aufweist.

13. Verfahren nach einem beliebigen der Ansprüche 1 bis 12, dadurch gekennzeichnet, daß als organisches Lösungsmittel der Imprägnierungslösung ein Keton, ein Alkyl, ein Aryl oder ein Alkylaryl, welches Halogen enthalten kann, verwendet wird.

14. Verfahren nach Anspruch 13, dadurch gekennzeichnet, daß als Lösungsmittel vorzugsweise Ethylmethylketon, Methylpropylketon, Isobutylmethylketon, Amylmethylketon, Cyclohexanon, Toluol, Xylol, Perchlorethylen, Trichlorethylen oder Dichlormethan verwendet wird.

15. Verfahren nach einem beliebigen der Ansprüche 1 bis 14, dadurch gekennzeichnet, daß die organische Imprägnierungslösung vorzugsweise 1 bis 40 Gew.-Teile des Imprägnierungsbestandteils enthält.

16. Verfahren nach einem beliebigen der Ansprüche 1 bis 15, dadurch gekennzeichnet, daß die Imprägnierungslösung der pulverförmigen Stoffe einige oder auch alle der folgenden Stoffe enthält: Farbstoffe, Katalysatoren, thermische oder photochemische Stabilisatoren, Schmiermittel, Weichmacher, Antistatika, Flammschutzmittel, oberflächenaktive Substanzen.

17. Verfahren nach einem beliebigen der Ansprüche 1 bis 16, dadurch gekennzeichnet, daß als zweiter Bestandteil der in Wärme aushärtenden Substanz verwendet werden:
   - Wasser, Polyole, Epoxypolymere, Amine oder Amide, wenn der erste Bestandteil ein Polyisocyanat ist,
   - Polyisocyanate, wenn der erste Bestandteil ein Polyol ist,
   - organische Substanzen (Härter) mit wenigstens einer $-NH_2$, $-CO-NH_2$, -NHR, -CO-NHR oder -COOH Funktion, wenn der erste Bestandteil ein Epoxypolymer ist.

18. Verfahren nach einem beliebigen der Ansprüche 1 bis 17, dadurch gekennzeichnet, daß die mit dem ersten Bestandteil imprägnierten, pulverförmigen Stoffe mit dem zweiten Bestandteil entweder in direkten Kontakt gebracht werden, falls besagter Bestandteil gasförmig oder flüssig ist, oder durch Benetzung mit einem kompatiblen, organischen Lösungsmittel falls besagter Bestandteil ungenügend flüssig ist, wobei das Lösungsmittels kontinuierlich entfernt wird.

## Claims

1. Process for the treatment of pulverulent materials using thermosetting compounds, characterised in that the pulverulent materials having a medium dimension between about 0.1 micron and about 25 millimeters are impregnated by means of an organic solution of at least one of the consituents of the desired thermosetting compound, in that the impregnation solution solvent is eliminated from the impregnated materials and in that the pulverulent materials which have been impregnated with the first constituent are placed in presence of the other constituent(s) of the desired thermosetting compound in order to bring about the formation of said compound and to obtain said treated materials.

2. Process according to claim 1, characterised in that the constituent of the organic impregnation solution is selected from the group consisting of polyisocyanates, polyols and epoxy polymers.

3. Process according to claims 1 or 2, characterised in that, when the constituent of the organic impregnation solution is a polyisocyanate, it is of the aromatic, aliphatic or linear type or it is a prepolymer obtained by the combination of the isocyanates with each other or with reactive compounds.

4. Process according to claim 3, characterised in that the polyisocyanate is preferably selected from the group consisting of toluene diisocyanate (T.D.I.), diphenylmethane-4,4'-diisocyanate and its homologues (M.D.I), 1,5-naphthalene diisocyanate hexamethylene diisocyanate (H.D.I.), isophorone diisocyanate (I.P.D.I.) and its linear isomer, the 1,4-transcyclohexene diisocyanate (C.D.I.).

5. Process according to claims 1 or 2, characterised in that, when the constituent of the organic impregnation solution is a polyol, it is selected from the group consisting of polyethers and polyesters.

6. Process according to claim 5, characterised in that when the polyol is a polyether, it is selected from the goup consisting of the addition products of methylene oxide or propylene oxide on a simple polyol, the addition products of ethylene oxide or propylene oxide on the amines, the halogenated polyethers, and the graft polyethers resulting from the copolymerisation of styrene and acrylonitrile in suspension in a polyether.

7. Process according to claim 5, characterised in that when the polyol is a polyester, it is selected from the group consisting of those resulting from the polycondensation of polyalcohols on polyacids or their anhydrides and preferably diacids, adipic or phthalic, reacting with polyalcohols, preferably with ethylene glycol, propylene glycol, butylene glycol, glycerol, trimethylolpropane, pentaerythritol, and mixtures thereof.

8. Process according to claim 5, characterised in that the polyol is selected from the group consisting of hydroxy compounds, prepolymers having hydroxy endings or simple polyols used with polyethers or polyesters in order to increase the crosslinking.

9. Process according to claims 1 or 2, characterised in that when the constituent of the organic impregnation solution is an epoxy polymer having at least one epoxy functional group per molecule, said polymer has a medium molecular weight between 350 and 3800 and an epoxy equivalent of 140 to 4000 and an esterification equivalent of 80 to 240.

10. Process according to claim 9, characterised in that the epoxy polymer preferably has a medium molecular weight between 470 and 2900 and an epoxy equivalent of 225 to 2050 and an esterification equivalent of 100 to 190.

11. Process according to any one of claims 1 to 10, characterised in that the constituent of the organic impregnation solution is associated with a vinyl polymer and/or copolymer modified or not by maleic acid.

12. Process according to claim 11, characterised in that the vinyl polymer and/or copolymer is selected from the group consisting of those having an medium molecular weight between about 5000 and 25000.

**13.** Process according to any one of claims 1 to 12, characterised in that the organic solvent of the impregnation solution is selected from the group consisting of ketones, alkyls, aryls, and halogenated or not alkylaryls.

**14.** Process according to claim 13, characterised in that the solvent is preferably selected from the group consisting of methyl ethyl ketone, methyl propyl ketone, methyl isobutyl ketone, methyl amyl ketone, cyclohexanone, toluene, xylene, perchloroethylene, trichloroethylene and dichloromethane.

**15.** Process according to any one of claims 1 to 14, characterised in that the organic impregnation solution preferably contains from 1% to 40% by weight based on the total mass, of the impregnation constituent.

**16.** Process according to any one of claims 1 to 15, characterised in that the impregnation solution possibly and totally or partly contains colorants, reaction catalysts, thermal or photochemical stabilizers, lubricants, plasticizers, anti-statics, flame retardants, or surfactants.

**17.** Process according to any one of claims 1 ot 16, characterised in that the second constituent of the desired thermosetting compound is selected from the group consisting of:

- water, polyols, epoxy polymers, amines, amides, when the first constituent is a polyisocyanate,
- polyisocyanates when the first constituent is a polyol,
- organic substances (hardening agents) having at least one of the $-NH_2$, $-CO-NH_2$, -NHR, -CO-NHR, -COOH functional substituents, when the first constituent is an epoxy polymer.

**18.** Process according to any one of claims 1 to 17, characterised in that the pulverulent materials which have been impregnated with the first constituent are placed in the presence of the second constituent, by direct contact when said constituent is gaseous or liquid, by moistening by means of a solution of said constituent in an organic compatible solvent when said constituent is insufficiently liquid, with continuous elimination of said solvent.